(19) Europäisches Patentamt
European Patent Office
Office européen des brevets

(11) EP 2 828 753 B1

(12) EUROPEAN PATENT SPECIFICATION

(45) Date of publication and mention
of the grant of the patent:
08.05.2019 Bulletin 2019/19

(51) Int Cl.:
H04L 29/06 (2006.01)    H04L 1/00 (2006.01)
G06N 5/02 (2006.01)    G06N 7/00 (2006.01)
G06F 21/57 (2013.01)

(21) Application number: 13800730.7

(22) Date of filing: 14.03.2013

(86) International application number:
PCT/US2013/031463

(87) International publication number:
WO 2013/184211 (12.12.2013 Gazette 2013/50)

(54) **ANOMALY DETECTION TO IDENTIFY COORDINATED GROUP ATTACKS IN COMPUTER NETWORKS**

ANOMALIEDETEKTION ZUR IDENTIFIKATION KOORDINIERTER GRUPPENANGRIFFE IN COMPUTERNETZWERKEN

DÉTECTION D'ANOMALIES PERMETTANT D'IDENTIFIER DES ATTAQUES GROUPÉES COORDONNÉES DANS DES RÉSEAUX INFORMATIQUES

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 22.03.2012 US 201261614148 P

(43) Date of publication of application:
28.01.2015 Bulletin 2015/05

(73) Proprietors:
• Triad National Security, LLC
Los Alamos, NM 87545 (US)
• Imperial Innovations Limited
London SW7 2PG (GB)

(72) Inventors:
• NEIL, Joshua, Charles
Jemez Springs, NM 87025 (US)
• TURCOTTE, Melissa
London N20 9EG (GB)
• HEARD, Nicholas, Andrew
Sevenoaks
Kent TN13 2QE (GB)

(74) Representative: Barker Brettell LLP
100 Hagley Road
Edgbaston
Birmingham B16 8QQ (GB)

(56) References cited:
US-A1- 2004 133 672    US-A1- 2005 044 406
US-A1- 2005 044 406    US-A1- 2007 209 074
US-A1- 2007 209 074    US-A1- 2007 226 796
US-A1- 2007 226 796    US-A1- 2010 192 226
US-A1- 2011 154 119    US-A1- 2011 231 937

• JOSHUA NEIL ET AL: "Scan Statistics for the Online Detection of Locally Anomalous Subgraphs", TECHNOMETRICS, vol. 55, no. 4, 1 November 2013 (2013-11-01), pages 403-414, XP055162176, ISSN: 0040-1706, DOI: 10.1080/00401706.2013.822830

• HRISTO DJIDJEV ET AL: "Graph Based Statistical Analysis of Network Traffic", TECHNOMETRICS, 1 August 2011 (2011-08-01), XP055162179,

• NEIL.: 'Scan Statistics for the Online Discovery of Locally Anomalous Subgraphs.' PARTIAL FULFILLMENT OF THE REQUIREMENTS FOR THE DEGREE OF DOCTOR OF PHILOSOPHY May 2011, THE UNIVERSITY OF NEW MEXICO, XP055162176 Retrieved from the Internet: <URL:http://repository.unm.edu/handle/1928/13885> [retrieved on 2013-10-28]

- AKOGLU ET AL.: 'Anomaly Detection in Large Graphs.' CMU-CS-09-173 TECHNICAL REPORT November 2009, SCHOOL OF COMPUTER SCIENCE CARNEGIE MELLON UNIVERSITY, PITTSBURGH, XP055162178 Retrieved from the Internet: <URL:http://citeseerx.ist.psu.edu/viewdoc/summary?doi=10.1.1.188.2619> [retrieved on 2013-10-28]

- DJIDJEV ET AL.: 'Graph Based Statistical Analysis of Network Traffic.' PROCEEDINGS OF THE NINTH WORKSHOP ON MINING AND LEARNING WITH GRAPHS. August 2011, XP055162179 Retrieved from the Internet: <URL:http://csr.lanl.gov/detection/> [retrieved on 2013-10-28]

**Description**

STATEMENT OF FEDERAL RIGHTS

The United States government has rights in this invention pursuant to Contract No. DE-AC52-06NA25396 between the United States Department of Energy and Los Alamos National Security, LLC for the operation of Los Alamos National Laboratory.

CROSS REFERENCE TO RELATED APPLICATIONS

FIELD

The present invention generally relates to detecting network anomalies, and, more particularly, to detecting anomalies that are indicative of coordinated group attacks on computer networks.

BACKGROUND

Detecting attacks by multiple attackers, whether human or automated systems (e.g., botnets) is of increasing importance in interest in computer security. For example, some approaches have attempted to detect botnets by using methods based on clustering computers over time that share similar characteristics in their communication and activity traffic. These methods monitor network traffic on the edge of a network, looking for hosts within the network that share similar connections to external Internet Protocol ("IP") addresses, rather than monitoring the internal network traffic. For the types of attacks these methods aim to detect, the various compromised hosts in the network aren't necessarily controlled by a central entity.

Another conventional intrusion detection system aims to detect large-scale malicious attacks on computer networks by constructing graphs of network activity over time based on a user specified rule set. Presenting graphs of these network events is believed to enable the analyst to visually determine if suspicious network activity is taking place. However, what would be considered as anomalous is left to the user, and there is no suggestion of looking for overlapping activity within a network as a measure of a coordinated attack occurring.

A significant area of research in intrusion detection is that of alert correlation, which involves clustering alerts generated by multiple intrusion detection systems. Statistical tests are used to assess correlation of the alerts based on their similarities and proximities in time. The aim is to reduce false positives and aid the analyst by attributing multiple alerts to a single threat, giving a more clear view of the different stages of an attack and reducing the amount of alerts the analyst has to sift through. However, such an approach does not specifically look for overlap in connectivity.

Detecting coordinated attacks on a much wider scale on online platforms, such as distributed denial-of service attacks or large-scale stealthy scans, is another major area of research. Collaborative intrusion detection systems aim to detect these coordinated attacks by using alert correlation as described above on alerts generated by intrusion detection systems across a range of networks. However, methods that address coordinated attacks on internal networks have not been addressed. Accordingly, an approach that identifies coordinated attacks on internal networks may be beneficial.

US2007209074 discloses a method, system, and computer program product for utilizing a mapping of activity occurring at and between devices on a computer network to detect and prevent network intrusions. An enhanced graph matching intrusion detection system (eGMIDS) is provided that provides data collection functions, data fusion techniques, graph matching algorithms, and secondary and other search mechanisms. Threats are modeled as a set of entities and interrelations between the entities and sample threat patterns are stored within a database. The eGMIDS utility initiates a graph matching algorithm by which the threat patterns are compared within the generated activity graph via subgraph isomorphism. A multi-layered approach including a targeted secondary layer search following a match during a primary layer search is provided; searches are tempered by attributes and constraints and the eGMIDS reduces the number of threat patterns searched by utilizing ontological generalization.

US2005044406 discloses systems and methods for analyzing historical network traffic and determining which traffic does not belong in a network. Intrusion detection is performed over a period of time, looking for behavioral patterns within networks or information systems and generating alerts when these patterns change. The intrusion detection system intelligently forms correlations between disparate sources to find traffic anomalies. Over time, behaviors are predictive, and the intrusion detection system attempts to predict outcomes, becoming proactive instead of just reactive. Intrusions occur throughout whole information systems, including both network infrastructure and application servers. By treating the information system as a whole and performing intrusion detection across it, the chances of detection are increased significantly.

US2007226796 discloses NETWAR, which is a utility that enables detection of both tactical and strategic threats against an individual entity and interrelated/affiliated networks of entities. A distributed network of sensors and evaluators are utilized to detect tactical attacks against one or more entities. Events on the general network are represented as an input graph, which is searched for matches of example pattern graphs that represent tactical attacks. The search is performed using a scalable graph matching engine and an ontology that is periodically updated by a subject matter expert or analyst. NETWAR provides the functionality to determine/understand the strategic significance of the detected tactical attacks by correlating detected tactical attacks on the individual entities to identify the true motive of these attacks as a strategic attack; NETWAR also provides predictive capability to predict future entities and sub-entities that may be targeted based on evaluation of the attack data.

"Scan Statistics for the Online Detection of Locally Anomalous Subgraphs" by Joshua Neil et al. discloses a computationally scalable method for detecting small anomalous areas in a large, time-dependent computer network, motivated by the challenge of identifying intruders operating inside enterprise-sized computer networks. Time-series of communications between computers are used to detect anomalies, and are modeled using Markov models that capture the bursty, often human-caused behavior that dominates a large subset of the time-series. Anomalies in these time-series are common, and the network intrusions we seek involve coincident anomalies over multiple connected pairs of computers. It is shown empirically that each time-series is nearly always independent of the time-series of other pairs of communicating computers. This independence is used to build models of normal activity in local areas from the models of the individual time-series, and these local areas are designed to detect the types of intrusions we are interested in. There is defined a locality statistic calculated by testing for deviations from historic behavior in each local area, and then a scan statistic as the maximum deviation score over all local areas. It is shown that identifying these local anomalies is sufficient to correctly identify anomalies of various relevant shapes in the network.

"Graph Based Statistical Analysis of Network Traffic" by Djidjev et al. proposes a method for analyzing traffic data in large computer networks such as big enterprise networks or the Internet. Their approach combines graph theoretical representation of the data and graph analysis with novel statistical methods for discovering pattern and timerelated anomalies. They model the traffic as a graph and use temporal characteristics of the data in order to decompose it into subgraphs corresponding to individual sessions, whose characteristics are then analyzed using statistical methods. The goal of that analysis is to discover patterns in the network traffic data that might indicate intrusion activity or other malicious behavior.

## SUMMARY

Certain embodiments of the present invention may provide solutions to the problems and needs in the art that have not yet been fully identified, appreciated, or solved by current network anomaly detection systems. For example, some embodiments of the present invention detect anomalies to identify coordinated group attacks on internal computer networks

In an embodiment, a computer-implemented method includes determining, by a computing system, an anomaly graph of a network including nodes, edges, and an indegree of the nodes in the anomaly graph. The computer-implemented method also includes designating, by the computing system, nodes with an indegree of at least two as potential targets and designating, by the computing system, nodes with no incoming connections as potentially compromised nodes. The computer-implemented method further includes outputting, by the computing system, the designated potentially compromised nodes as potentially associated with a coordinated attack on the network when the potentially compromised nodes connect to one or more of the same potential target nodes.

In another embodiment, an apparatus includes at least one processor and memory including instructions. The instructions, when executed by the at least one processor, are configured to cause the at least one processor to monitor a network over time periods to determine anomalous behavior signifying potential activity from a group of attackers during at least one time period. The instructions are also configured to cause the at least one processor to provide an indication that a potential group attack is occurring in the network when anomalous behavior is determined during at least one time period, wherein the determination of the anomalous behavior is based on a determination of whether multiple nodes with no indegree and common node connections exist during the time period.

In yet another embodiment, a system includes memory storing computer program instructions configured to detect anomalies in a network and a plurality of processing cores configured to execute the stored computer program instructions. The plurality of processing cores is configured to generate an anomaly graph for a network during a time period. The processing cores are also configured to determine whether multiple nodes with no indegree and common node connections exist during the time period. The processing cores are further configured to generate an indication of a potential group attack on the network when the system determines that multiple nodes with no indegree and common node connections exist in one or more subgraphs of the anomaly graph.

BRIEF DESCRIPTION OF THE DRAWINGS

For a proper understanding of the invention, reference should be made to the accompanying figures. These figures depict only some embodiments of the invention and are not limiting of the scope of the invention. Regarding the figures:

FIG. 1A is a subgraph of a set of nodes $S_t$ displaying potentially anomalous behavior, according to an embodiment of the present invention.
FIG. 1B is an anomaly subgraph $\overline{S}_t$ that has been reduced to nodes displaying group activity, according to an embodiment of the present invention.
FIG. 2 is a flowchart illustrating a method for detecting anomalies to identify coordinated group attacks on a network, according to an embodiment of the present invention.
FIG. 3 is a flowchart illustrating a method for detecting anomalies to identify coordinated group attacks on a network, according to an embodiment of the present invention.
FIG. 4 is a flowchart illustrating a method for detecting anomalies to identify coordinated group attacks on a network, according to an embodiment of the present invention.
FIG. 5 is a block diagram of a computing system for detecting group attacks on a network, according to an embodiment of the present invention.

DETAILED DESCRIPTION OF THE EMBODIMENTS

Some embodiments of the present invention detect statistical anomalies from multiple, usually coordinated attackers (i.e., teams) in an internal computer network. In certain embodiments, the detection may be performed in real time. Such embodiments consider the problem of anomaly detection on an internal computer network where an anomaly signifies an attack on the network. In particular, the aim of some embodiments is to use an anomaly-based detection system to detect coordinated attacks where an intruder compromises several hosts in the network and simultaneously uses these hosts to conduct targeted malicious activity.

The team aspect of some embodiments is highly novel. Sophisticated adversaries normally use teams of simultaneous attackers to accomplish the mission quickly, particularly in the case of state actors. However, this leads to a larger signal, statistically speaking, since anomalous behavior tends to be more prevalent when multiple attackers are present. Therefore, some embodiments take the simultaneous nature into account, producing better detection performance than considering each anomaly independently.

To enable deployment on large networks, some embodiments initially treat all nodes and edges in the network graph as independent entities and look for potentially anomalous edges over time for significant overlapping or correlated behavior signifying group activity. An example of such group activity could be compromised nodes all connecting with a common set of nodes within some specified time period. Behavior may be classified as anomalous based on some deviation from historical behavior learned using baseline statistical probability models, such as the models discussed in the priority application. The validity of this independence assumption relies on learning the seasonal behavior of each node from the historical data, which informs the baseline probability model. Next, for those periods in which a node is active, the connections along the edges emanating from that node are also treated as being conditionally independent. Together, these two aspects provide a probability model for the activity levels along each edge in the network.

This aggregation of anomalous edges may be a similar idea to the methodology of some implementations in the priority application, which may look for anomalous edges within a network that form a path, with the aim of detecting traversal of an attacker. However, rather than looking for traversal through the network initiating from a single compromised node, some embodiments aim to detect overlap in connections from multiple compromised nodes. Intruders tend to create new behavioral patterns due to the nature of their operations within the network, as well as the fact that they generally do not have access to historical data.

Identification of hackers once they have penetrated the perimeter defenses is paramount in defending government and corporate networks. Rapidly identifying teams of attackers before they can penetrate core network assets can mean millions of dollars in savings for the attacked institution. If the attackers are allowed to persist in a network, penetrating the core machines, the only solution is typically to shut the network down for days, if not weeks. This has obvious implications, from eliminating the functionality of the network to causing significant public relations damage. Per the above, some embodiments of the present invention monitor internal networks to detect teams of hackers. This beneficial feature is not possible with, nor recognized by, conventional systems.

Statistical anomaly detection in some embodiments involves monitoring behavior along each edge (or at least multiple edges) in the network and looking for outlying behavior with respect to a fitted probability model. While an edge continues to behave normally, the data observed may be used to further refine the probability model in a coherent updating scheme. Otherwise, edges can be flagged as anomalous if their current behavior deviates significantly from past behavior. At each point in time, a *p*-value from the probability model can be obtained for the current behavior along each edge to quantify the current level of deviation. A low *p*-value may be indicative of potentially anomalous behavior.

A novel aspect of some embodiments is to search within the seemingly anomalous edges over some window of time for significant overlapping or correlated behavior, signifying group activity. An example of such group activity may be compromised nodes all connecting with a common set of nodes within some specified time period. The deviation from normal behavior in observing substantially overlapping anomalous behavior is not captured by the statistically independent probability models, and, thus, this can be seen as additional, relevant information that should be processed within an anomaly detection system.

Aggregating of anomalous edges to detect overlap is a similar idea to the methodology of some implementations discussed in the priority application, which may look for anomalous edges within a network that form a path, with the aim of detecting traversal of an attacker. However, in some embodiments of the present invention, rather than looking for traversal through the network initiating from a single compromised node, overlap in connections from several compromised nodes is detected. A brief example of how overlapping activity can be detected follows.

Recent behavior in the network may be considered to include all connection events during a sliding time window. The width of this window w can be chosen to suit the concerns of the analyst. However, since the embodiment discussed in this example is directed to detecting coordinated activity, w should be small relative to the entire history of the graph.

At time *t,* let $(V_t, E_t)$ be the current graph consisting of all communicating nodes $V_t$ and all edges $E_t$ active during the most recent time window $(t - w, t)$. For each edge $(i,j) \in E_t$, a *p*-value $p_{ij,t}$ is obtained, signifying how far the edge has deviated from its usual behavior. For a *p*-value threshold $T \in (0,1)$, an anomaly graph of the network $S_t = (V_t^S, E_t^S)$ is formed from edges that have a positive *p*-value below the threshold:

$$E_t^S = \left\{ (i,j) \in E_t | p_{ij,t} < T \right\} \qquad (1)$$

$$V_t^S = \{ i \in V_t | \exists j \neq i \in V_t \text{ s.t. } (i,j) \in E_t^S \text{ or } (j,i) \in E_t^S \} \qquad (2)$$

In equation (2), "s.t." stands for "such that". In practice, the threshold T can be chosen such that, over a training period, the average anomaly graph size $\{|E_t^S|\}$ does not exceed a desired number.

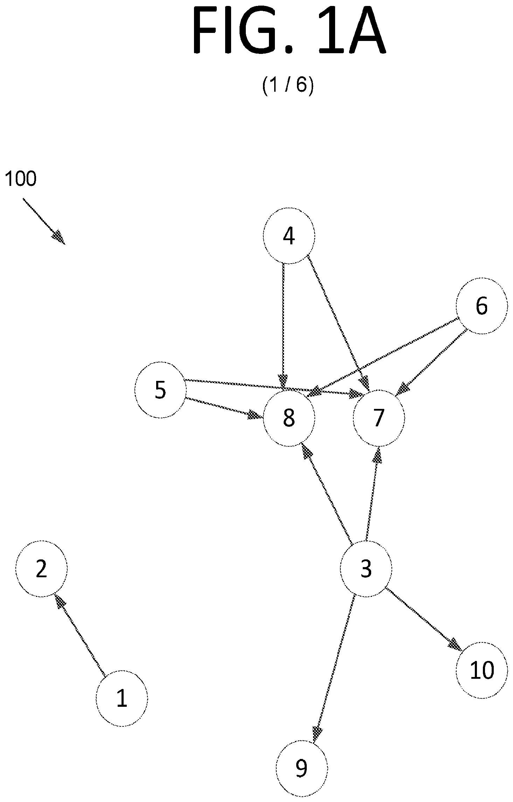

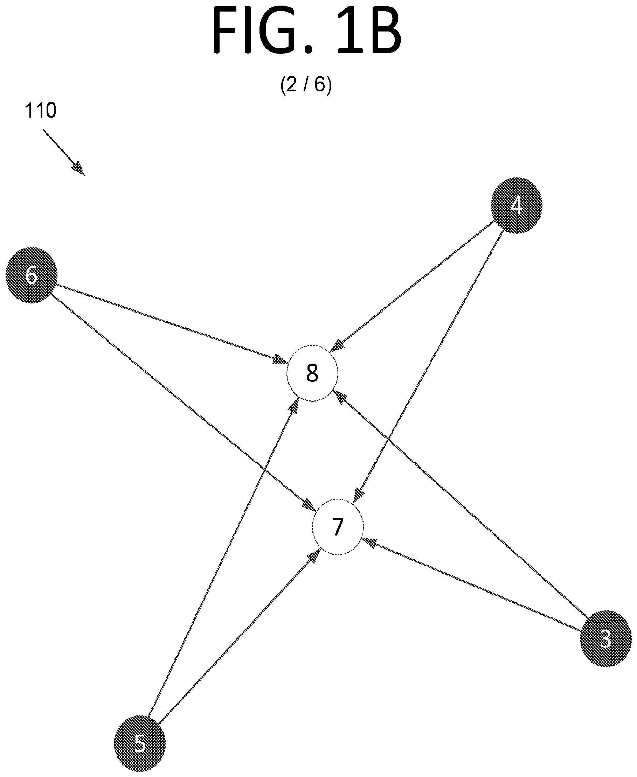

To remove potentially spurious edges, the anomaly graph can be further reduced by deleting all edges that connect to a node with an indegree of one. An example is shown in FIGS. 1A and IB. This example focuses on graphs of structures that display group behavior. In FIG. 1A, subgraph 100 shows a set of nodes $S_t$ displaying potentially anomalous behavior. In FIG. 1B, anomaly subgraph $\overline{S}_t$ 110 has been reduced to nodes displaying group activity. It should be noted that each subgraph may represent a group attack, and multiple anomaly subgraphs may be produced in a given time period, or time window, if multiple potential group attacks are detected. Nodes with zero indegree, that is, nodes that receive no incoming connections, are shaded and can be considered as suspected *compromised* nodes (see FIG. IB). Nodes with an indegree of two or more can be considered to be the *targets* (for instance, nodes 7 and 8 in FIGS. 1A and IB). It should be noted that a node can fall into both categories, and not all nodes without incoming connections are compromised.

A weakly connected subgraph (i.e., component) of a graph is a maximal subgraph with the property that if all directed edges were replaced with undirected edges, the resulting subgraph would be connected. Each of the weakly connected subgraphs of $\overline{S}_t$ can be considered as potentially anomalous, and therefore potentially part of a coordinated attack.

A summary statistic $O_k$ can be calculated for each weakly connected subgraph $A_k = (V_k, E_k)$ of a graph to describe the level of overlap. An appropriate choice of the summary statistic might vary according to the nature of the attacks being sought. However, one such statistic that may be considered is the number of undirected edges in the subgraph:

$$O_k = \sum_{i<j} \max\left\{ \mathbb{I}\left(e_{ij} \in E_k\right), \mathbb{I}(e_{ji} \in E_k) \right\} \qquad (3)$$

For simplicity, the observed overlap statistics may be assumed to be independently and identically distributed from some common, but unknown, distribution. An empirical distribution calculated from observed values of the statistic during a training period can provide a nonparametric estimate of this unknown, and potentially complex, distribution.

Returning to evaluation of the network at time $t$, $p$-values with respect to this empirical distribution may be obtained for each of the weakly connected subgraphs of the reduced anomaly graph $\overline{S}_t$ to provide a measure of anomalousness in the level of overlap in the more anomalous behavior in the network.

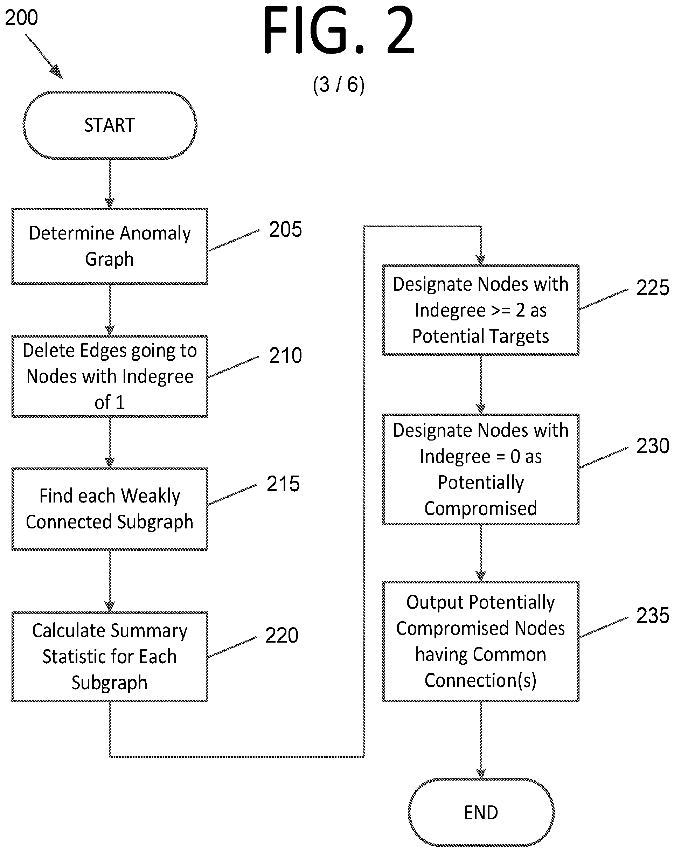

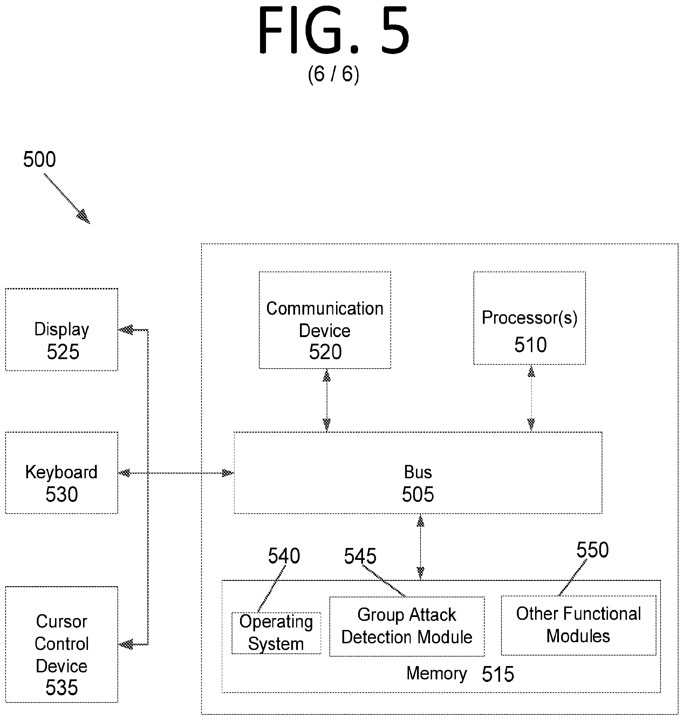

FIG. 2 is a flowchart 200 illustrating a method for detecting anomalies to identify coordinated group attacks on a network, according to an embodiment of the present invention. In some embodiments, the method of FIG. 2 may be performed, for example, by computing system 500 of FIG. 5. The method begins with determining an anomaly graph of a network at 205. The anomaly graph may include nodes, edges, and an indegree of the nodes in the anomaly graph. Next, incoming edges going to nodes with an indegree of one are deleted from the anomaly graph at 210.

Each weakly connected subgraph within the anomaly graph is found at 215. A summary statistic is calculated for each subgraph at 220 to describe the level of overlap. Nodes with an indegree of two or more are designated as potential targets at 225. Nodes with no incoming connections are designated as potentially compromised nodes at 230. The designated potentially compromised nodes are then output as potentially being part of a coordinated attack on the network at 235 when the potentially compromised nodes connect to one or more of the same potential target nodes.

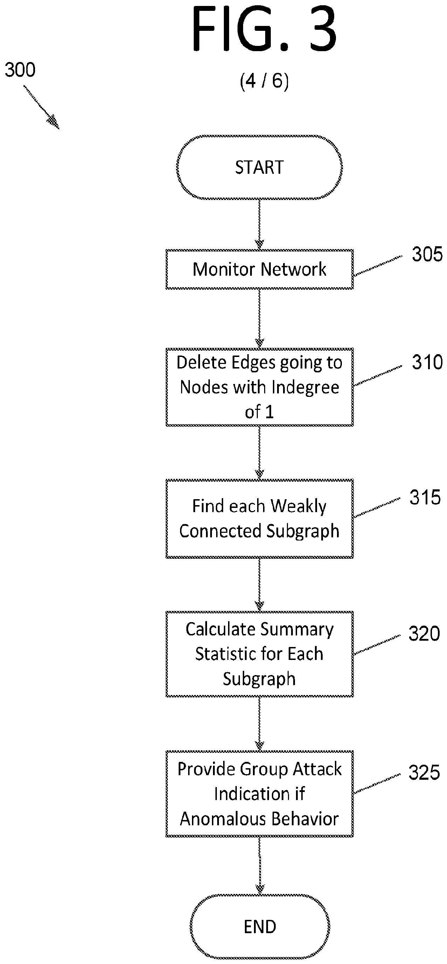

FIG. 3 is a flowchart illustrating a method for detecting anomalies to identify coordinated group attacks on a network, according to an embodiment of the present invention. In some embodiments, the method of FIG. 3 may be performed, for example, by computing system 500 of FIG. 5. The method begins with monitoring a network over time periods at 305 to determine anomalous behavior signifying potential activity from a group of attackers during at least one time period. The anomalous behavior may include overlapping or correlated behavior where a group of potentially compromised nodes attempt to connect to common nodes during at least one of the time periods. A $p$-value may be determined for each edge in the network in an anomaly graph. The $p$-value indicates how far a respective edge has deviated from its normal behavior. The anomaly graph may be formed based on the $p$-values and a $p$-value threshold.

Incoming edges going to nodes with an indegree of one are deleted from the anomaly graph at 310. Each weakly connected subgraph within the anomaly graph is found at 315. A summary statistic is calculated for each subgraph at 320 using the number of undirected edges in the given subgraph. An indication that a group attack may be occurring in the network is then provided at 325 when anomalous behavior is determined during at least one of the time period.

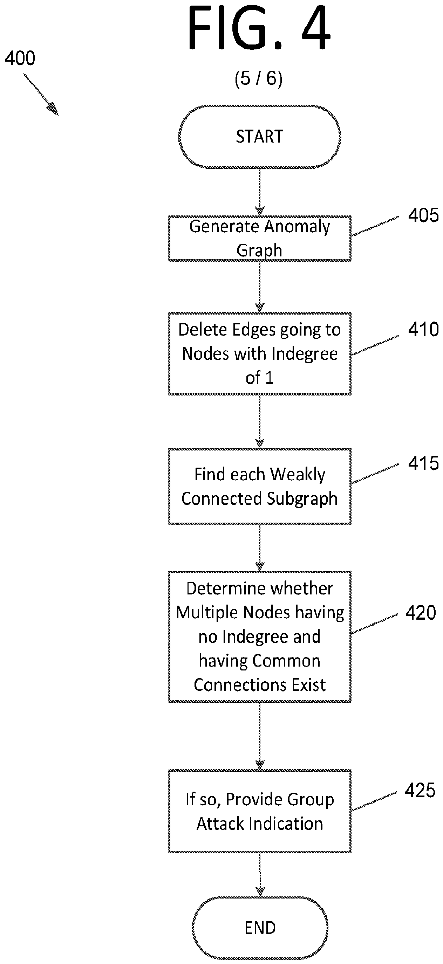

FIG. 4 is a flowchart illustrating a method for detecting anomalies to identify coordinated group attacks on a network, according to an embodiment of the present invention. In some embodiments, the method of FIG. 4 may be performed, for example, by computing system 500 of FIG. 5. The method begins with generating an anomaly graph for a network during a time period at 405. A $p$-value may be determined for each edge in the anomaly graph. The $p$-value indicates how far a respective edge has deviated from its normal behavior. The anomaly graph may be formed based on the $p$-values and a $p$-value threshold. Incoming edges going to nodes with an indegree of one are deleted from the anomaly graph at 410. Each weakly connected subgraph within the anomaly graph is found at 415.

It is determined whether multiple nodes with no indegree and common node connections exist during the time period at 420. If so, an indication of a potential group attack on the network is generated at 425. The indication may include potentially compromised nodes having no indegree and common node connnections, and potential target nodes with an indegree of two or more to which the potentially compromised nodes are connected.

FIG. 5 is a block diagram of a computing system 500 for detecting group attacks on a network, according to an embodiment of the present invention. Computing system 500 includes a bus 505 or other communication mechanism for communicating information, and processor(s) 510 coupled to bus 505 for processing information. Processor(s) 510 may be any type of general or specific purpose processor, including a central processing unit ("CPU") or application specific integrated circuit ("ASIC"). Processor(s) 510 may also have multiple processing cores, and at least some of the cores may be configured to perform specific functions. Computing system 500 further includes a memory 515 for storing information and instructions to be executed by processor(s) 510. Memory 515 can be comprised of any combination of random access memory ("RAM"), read only memory ("ROM"), flash memory, cache, static storage such as a magnetic or optical disk, or any other types of non-transitory computer-readable media or combinations thereof. Additionally, computing system 500 includes a communication device 520, such as a transceiver, to wirelessly provide access to a communications network.

Non-transitory computer-readable media may be any available media that can be accessed by processor(s) 510 and may include both volatile and non-volatile media, removable and non-removable media, and communication media. Communication media may include computer-readable instructions, data structures, program modules or other data in a modulated data signal such as a carrier wave or other transport mechanism and includes any information delivery media.

Processor(s) 510 are further coupled via bus 505 to a display 525, such as a Liquid Crystal Display ("LCD"), for displaying information to a user. A keyboard 530 and a cursor control device 535, such as a computer mouse, are further coupled to bus 505 to enable a user to interface with computing system 500. However, in certain embodiments such as those for mobile computing implementations, a physical keyboard and mouse may not be present, and the user may interact with the device solely through display 525 and/or a touchpad (not shown). Any type and combination of input devices may be used as a matter of design choice.

In one embodiment, memory 515 stores software modules that provide functionality when executed by processor(s) 510. The modules include an operating system 540 for computing system 500. The modules further include a group attack detection module 545 that is configured to detect group attacks using one or more embodiments of the present invention. Computing system 500 may include one or more additional functional modules 550 that include additional functionality.

One skilled in the art will appreciate that a "system" could be embodied as a personal computer, a server, a console, a personal digital assistant ("PDA"), a cell phone, a tablet computing device, or any other suitable computing device, or combination of devices. Presenting the above-described functions as being performed by a "system" is not intended to limit the scope of the present invention in any way, but is intended to provide one example of many embodiments of the present invention. Indeed, methods, systems and apparatuses disclosed herein may be implemented in localized and distributed forms consistent with computing technology, including cloud computing systems.

It should be noted that some of the system features described in this specification have been presented as modules, in order to more particularly emphasize their implementation independence. For example, a module may be implemented as a hardware circuit comprising custom very large scale integration ("VLSI") circuits or gate arrays, off-the-shelf semiconductors such as logic chips, transistors, or other discrete electronic components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, comprise one or more physical or logical blocks of computer instructions that may, for instance, be organized as an object, procedure, or function. Nevertheless, the executables of an identified module need not be physically located together, but may comprise disparate instructions stored in different locations which, when joined logically together, comprise the module and achieve the stated purpose for the module. Further, modules may be stored on a computer-readable medium, which may be, for instance, a hard disk drive, flash device, RAM, tape, or any other such medium used to store data.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

The method steps performed in FIGS. 2-4 may be performed by a computer program, encoding instructions for the nonlinear adaptive processor to perform at least the methods described in FIGS. 2-4, in accordance with embodiments of the present invention. The computer program may be embodied on a non-transitory computer-readable medium. The computer-readable medium may be, but is not limited to, a hard disk drive, a flash device, a random access memory, a tape, or any other such medium used to store data. The computer program may include encoded instructions for controlling the nonlinear adaptive processor to implement the methods described in FIGS. 2-4, which may also be stored on the computer-readable medium.

The computer program can be implemented in hardware, software, or a hybrid implementation. The computer program can be composed of modules that are in operative communication with one another, and which are designed to pass information or instructions to display. The computer program can be configured to operate on a general purpose computer, or an ASIC.

It will be readily understood that the electronic components of various embodiments of the present invention, as generally described and illustrated in the figures herein, may be arranged and designed in a wide variety of different configurations. Thus, the detailed description of the embodiments of the systems, apparatuses, methods, and computer programs of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

**Claims**

1. A computer-implemented method, comprising:

   determining (205), by a computing system, an anomaly graph of a network comprising nodes, edges, and an indegree of the nodes in the anomaly graph comprising subgraphs during a time period;
   designating (225), by the computing system, nodes with an indegree of at least two as potential targets;
   designating (230), by the computing system, nodes with no indegree and common node connections existing during the time period as potentially compromised nodes; and
   outputting (235), by the computing system, the designated potentially compromised nodes as potentially associated with a coordinated attack on the network when the potentially compromised nodes connect to at least one of the same potential target nodes.

2. The computer-implemented method of claim 1, wherein the steps of claim 1 are performed periodically, by the computing system, during sliding time windows.

3. The computer-implemented method of claim 1, further comprising:
   deleting (210), by the computing system, incoming edges going to nodes with the indegree of one from the anomaly graph.

4. The computer-implemented method of claim 1, further comprising:
   Determining (215), by the computing system, each weakly connected subgraph in the anomaly graph.

5. The computer-implemented method of claim 4, further comprising:
   calculating (220) a summary statistic for $O_k$ for each subgraph using a number of undirected edges in the given subgraph, the summary statistic determined by:

$$O_k = \sum_{i<j} \max\{\mathbb{I}(e_{ij} \in E_k), \mathbb{I}(e_{ji} \in E_k)\}$$

   where $e_{ij}$ and $e_{ji}$ represent edges in a set of edges $E_k$ for the given subgraph.

6. The computer-implemented method of claim 1, wherein the computing system is configured to treat all of the nodes and edges in the anomaly graph as independent entities.

7. The computer-implemented method of claim 1, wherein for a *p*-value threshold $T \in (0,1)$, the anomaly graph $S_t = (V_t^S, E_t^S)$ of the network is formed from the edges that have a positive *p*-value below the threshold:

$$E_t^S = \{(i,j) \in E_t | p_{ij,t} < T\}$$

$$V_t^S = \{i \in V_t | \exists j \neq i \in V_t \text{ s.t. } (i,j) \in E_t^S \text{ or } (j,i) \in E_t^S\}$$

where $E_t^S$ is a set of edges in $S_t$, $V_t^S$ is the set of nodes in $S_t$, and $p_{ij,t}$ is the *p*-value for a given edge $(i,j) \in E_t$.

8. An apparatus, comprising:

   at least one processor (510); and
   memory (515) storing computer program instructions, wherein the instructions, when executed by the at least one processor, are configured to cause the at least one processor to: generate an anomaly graph for a network during a time period;
   monitor a network over time periods to determine anomalous behavior signifying potential activity from a group of attackers during at least one time period, wherein the determination of the anomalous behavior is based on a determination of whether multiple nodes with no indegree and common node connections exist during the time period; and
   provide an indication that a potential group attack is occurring in the network when anomalous behavior is determined during at least one time period in one or more subgraphs of the anomaly graph.

9. The apparatus of claim 8, wherein the anomalous behavior comprises overlapping or correlated behavior where a group of potentially compromised nodes attempt to connect to common nodes during at least one of the time periods.

10. The apparatus of claim 8, wherein the instructions are further configured to cause the at least one processor to determine a *p*-value for each edge in the network, where the *p*-value indicates how far a respective edge has deviated from its normal behavior.

11. The apparatus of claim 10, wherein for a *p*-value threshold $T \in (0,1)$, the instructions are further configured to cause the at least one processor to form an anomaly graph $S_t = (V_t^S, E_t^S)$ of the network from edges that have a positive *p*-value below the threshold:

$$E_t^S = \{(i,j) \in E_t | p_{ij,t} < T\}$$

$$V_t^S = \{i \in V_t | \exists j \neq i \in V_t \text{ s.t. } (i,j) \in E_t^S \text{ or } (j,i) \in E_t^S\}$$

where $E_t^S$ is a set of edges in $S_t$, $V_t^S$ is the set of nodes in $S_t$, and $p_{ij,t}$ is the *p*-value for a given edge $(i,j) \in E_t$.

12. The apparatus of claim 11, wherein the instructions are further configured to cause the at least one processor to: delete incoming edges going to nodes with an indegree of one from the anomaly graph.

13. The apparatus of claim 11, wherein the instructions are further configured to cause the at least one processor to: determine each weakly connected subgraph in the anomaly graph.

14. The apparatus of claim 13, wherein the instructions are further configured to cause the at least one processor to calculate a summary statistic for $O_k$ for each subgraph using a number of undirected edges in the given subgraph, the summary statistic determined by:

$$O_k = \sum_{i<j} \max\{\mathbb{I}(e_{ij} \in E_k), \mathbb{I}(e_{ji} \in E_k)\}$$

where $e_{ij}$ and $e_{ji}$ represent edges in a set of edges $E_k$ for the given subgraph.

15. A system, comprising:

> memory storing computer program instructions configured to detect anomalies in a network; and
> a plurality of processing cores configured to execute the stored computer program instructions, wherein plurality of processing cores is configured to:
>
>> generate an anomaly graph for a network during a time period;
>> determine whether multiple nodes with no indegree and common node connections exist during the time period; and
>> generate an indication of a potential group attack on the network when the system determines that multiple nodes with no indegree and common node connections exist in one or more subgraphs of the anomaly graph.

16. The system of claim 15, wherein the indication comprises potentially compromised nodes having no indegree and common node connections, and potential target nodes with an indegree of two or more to which the potentially compromised nodes are connected.

17. The system of claim 15, wherein the plurality of processing cores are further configured to determine a *p*-value for each edge in the network, where the *p*-value indicates how far a respective edge has deviated from its normal behavior.

18. The system of claim 17, wherein for a *p*-value threshold $T \in (0,1)$, the processing cores are further configured to form the anomaly graph $S_t = (V_t^S, E_t^S)$ of the network from edges that have a positive *p*-value below the threshold:

$$E_t^S = \left\{ (i,j) \in E_t \mid p_{ij,t} < T \right\}$$

$$V_t^S = \{ i \in V_t \mid \exists j \neq i \in V_t \ \text{s.t.} \ (i,j) \in E_t^S \ \text{or} \ (j,i) \in E_t^S \}$$

where $E_t^S$ is a set of edges in $S_t$, $V_t^S$ is the set of nodes in $S_t$, and $p_{ij,t}$ is *the p*-value for a given edge $(i,j) \in E_t$.

19. The system of claim 15, wherein the processing cores are further configured to:

> delete incoming edges going to nodes with an indegree of one from the anomaly graph; and/or
> determine each weakly connected subgraph in the anomaly graph.

**Patentansprüche**

1. Computerimplementiertes Verfahren, umfassend:

> Bestimmen (205), durch ein Rechnersystem, eines Anomaliegraphen eines Netzes, umfassend Knoten, Kanten und einen Eingangsgrad der Knoten in dem Anomaliegraphen, umfassend Subgraphen während einer Zeitperiode;
> Bezeichnen (225), durch das Rechnersystem, von Knoten mit einem Eingangsgrad von mindestens zwei als potentielle Ziele;
> Bezeichnen (230), durch das Rechnersystem, von Knoten mit keinem Eingangsgrad und keinen gemeinsamen Knotenverbindungen, die während der Zeitperiode als potentiell beeinträchtigte Knoten existieren; und
> Ausgeben (235), durch das Rechnersystem, der bezeichneten potentiell beeinträchtigten Knoten als potentiell assoziiert mit einem koordinierten Angriff auf das Netz, wenn die potentiell beeinträchtigten Knoten mit mindestens einem derselben potentiellen Zielknoten verbunden sind.

2. Computerimplementiertes Verfahren nach Anspruch 1, wobei die Schritte von Anspruch 1 periodisch, durch das Rechnersystem, während Gleitzeitfenstern vorgenommen werden.

3. Computerimplementiertes Verfahren nach Anspruch 1, ferner umfassend:
Löschen (210), durch das Rechnersystem, ankommender Kanten, die zu Knoten mit dem Eingangsgrad von eins gehen, aus dem Anomaliegraphen.

4. Computerimplementiertes Verfahren nach Anspruch 1, ferner umfassend:
Bestimmen (215), durch das Rechnersystem, jedes schwach verbundenen Subgraphen in dem Anomaliegraphen.

5. Computerimplementiertes Verfahren nach Anspruch 4, ferner umfassend:
Berechnen (220) einer Zusammenfassungsstatistik für $O_k$ für jeden Subgraphen unter Verwendung einer Anzahl ungerichteter Kanten in dem gegebenen Subgraphen, wobei die Zusammenfassungsstatistik bestimmt wird durch:

$$O_k = \sum_{i<j} \max\{\mathbb{I}(e_{ij} \in E_k), \mathbb{I}(e_{ji} \in E_k)\}$$

wobei $e_{ij}$ und $e_{ji}$ Kanten in einem Satz von Kanten $E_k$ für den gegebenen Subgraphen darstellen.

6. Computerimplementiertes Verfahren nach Anspruch 1, wobei das Rechnersystem ausgelegt ist, alle der Knoten und Kanten in dem Anomaliegraphen als unabhängige Einheiten zu behandeln.

7. Computerimplementiertes Verfahren nach Anspruch 1, wobei für eine p-Wertschwelle $T \in (0,1)$ der Anomaliegraph $S_t = (V_t^S, E_t^S)$ des Netzes aus den Kanten gebildet wird, die einen positiven p-Wert unter der Schwelle aufweisen:

$$E_t^S = \{(i,j) \in E_t | p_{ij,t} < T\}$$

$$V_t^S = \{i \in V_t | \exists j \neq i \in V_t \text{ s.t. } (i,j) \in E_t^S \text{ oder } (j,i) \in E_t^S\}$$

wobei $E_t^S$ ein Satz von Kanten in $S_t$ ist, $V_t^S$ der Satz von Knoten in $S_t$ ist, und $p_{ij,t}$ der p-Wert für eine gegebene Kante $(i, j) \in E_t$ ist.

8. Vorrichtung, umfassend:

mindestens einen Prozessor (510); und
einen Speicher (515), der Computerprogramminstruktionen speichert, wobei die Instruktionen, wenn sie von dem mindestens einen Prozessor ausgeführt werden, ausgelegt sind, den mindestens einen Prozessor zu veranlassen:

einen Anomaliegraphen für ein Netz während einer Zeitperiode zu generieren;
ein Netz über Zeitperioden zu überwachen, um ein abnormales Verhalten zu bestimmen, das eine potentielle Aktivität von einer Gruppe von Angreifern während der mindestens einen Zeitperiode darstellt, wobei die Bestimmung des abnormalen Verhaltens auf einer Bestimmung davon basiert, ob mehrfache Knoten mit keinem Eingangsgrad und keinen gemeinsame Knotenverbindungen während der Zeitperiode existieren; und
eine Anzeige zu liefern, dass ein potentieller Gruppenangriff in dem Netz stattfindet, wenn ein abnormales Verhalten während der mindestens einen Zeitperiode in einem oder mehreren Subgraphen des Anomaliegraphen bestimmt wird.

9. Vorrichtung nach Anspruch 8, wobei das abnormale Verhalten ein überlappendes oder korreliertes Verhalten umfasst, wo eine Gruppe potentiell beeinträchtigter Knoten versucht, mit gemeinsamen Knoten während mindestens einer der Zeitperioden verbunden zu werden.

10. Vorrichtung nach Anspruch 8, wobei die Instruktionen ferner ausgelegt sind, den mindestens einen Prozessor zu veranlassen, einen p-Wert für jede Kante in dem Netz zu bestimmen, wobei der p-Wert anzeigt, wie weit eine entsprechende Kante von ihrem normalen Verhalten abgewichen ist.

11. Vorrichtung nach Anspruch 10, wobei für eine p-Wertschwelle $T \in (0,1)$ die Instruktionen ferner ausgelegt sind, den mindestens einen Prozessor zu veranlassen, einen Anomaliegraphen $S_t = (V_t^s, E_t^s)$ des Netzes aus den Kanten zu bilden, die einen positiven p-Wert unter der Schwelle aufweisen:

$$E_t^S = \{(i,j) \in E_t | p_{ij,t} < T\}$$

$$V_t^S = \{i \in V_t | \exists j \neq i \in V_t \, \text{s.t.} \, (i,j) \in E_t^S \quad \text{oder} \quad (j,i) \in E_t^S\}$$

wobei $E_t^S$ ein Satz von Kanten in $S_t$ ist, $V_t^S$ der Satz von Knoten in $S_t$ ist, und $p_{ij,t}$ der p-Wert für eine gegebene Kante $(i, j) \in E_t$ ist.

12. Vorrichtung nach Anspruch 11, wobei die Instruktionen ferner ausgelegt sind, den mindestens einen Prozessor zu veranlassen:
ankommende Kanten, die zu Knoten mit einem Eingangsgrad von eins gehen, aus dem Anomaliegraphen zu löschen.

13. Vorrichtung nach Anspruch 11, wobei die Instruktionen ferner ausgelegt sind, den mindestens einen Prozessor zu veranlassen:
jeden schwach verbundenen Subgraphen in dem Anomaliegraphen zu bestimmen.

14. Vorrichtung nach Anspruch 13, wobei die Instruktionen ferner ausgelegt sind, den mindestens einen Prozessor zu veranlassen, eine Zusammenfassungsstatistik für $O_k$ für jeden Subgraphen unter Verwendung einer Anzahl ungerichteter Kanten in dem gegebenen Subgraphen zu berechnen, wobei die Zusammenfassungsstatistik bestimmt wird durch:

$$O_k = \sum_{i<j} \max\{\mathbb{I}(e_{ij} \in E_k), \mathbb{I}(e_{ji} \in E_k)\}$$

wobei $e_{ij}$ und $e_{ji}$ Kanten in einem Satz von Kanten $E_k$ für den gegebenen Subgraphen darstellen.

15. System, umfassend:

einen Speicher, der Computerprogramminstruktionen speichert, die ausgelegt sind, Anomalien in einem Netz zu detektieren; und
eine Vielzahl von Verarbeitungskernen, die ausgelegt sind, die gespeicherten Computerprogramminstruktionen auszuführen, wobei die Vielzahl von Verarbeitungskernen ausgelegt ist:

einen Anomaliegraphen für ein Netz während einer Zeitperiode zu generieren;
zu bestimmen, ob mehrfache Knoten mit keinem Eingangsgrad und keinen gemeinsame Knotenverbindungen während der Zeitperiode existieren; und
eine Anzeige eines potentiellen Gruppenangriffs auf das Netz zu generieren, wenn das System bestimmt, dass mehrfache Knoten mit keinen Eingangsgrad und keinen gemeinsame Knotenverbindungen in einem oder mehreren Subgraphen des Anomaliegraphen existieren.

**16.** System nach Anspruch 15, wobei die Anzeige umfasst: potentiell beeinträchtigte Knoten mit keinem Eingangsgrad und keinen gemeinsame Knotenverbindungen, und potentielle Zielknoten mit einem Eingangsgrad von zwei oder mehr, mit denen die potentiell beeinträchtigten Knoten verbunden sind.

**17.** System nach Anspruch 15, wobei die Vielzahl von Verarbeitungskernen ferner ausgelegt ist, einen p-Wert für jede Kante in dem Netz zu bestimmen, wobei der p-Wert anzeigt, wie weit eine jeweilige Kante von ihrem normalen Verhalten abgewichen ist.

**18.** System nach Anspruch 17,
wobei für eine p-Wertschwelle $T \in (0,1)$ die Verarbeitungskerne ferner ausgelegt sind, den Anomaliegraphen $S_t = (V_t^S, E_t^S)$ des Netzes aus den Kanten zu bilden, die einen positiven p-Wert unter der Schwelle aufweisen:

$$E_t^S = \left\{ (i,j) \in E_t \,|\, p_{ij,t} < T \right\}$$

$$V_t^S = \{i \in V_t \,|\, \exists j \neq i \in V_t \text{ s.t. } (i,j) \in E_t^S \quad \text{oder} \quad (j,i) \in E_t^S\}$$

wobei $E_t^S$ ein Satz von Kanten in $S_t$ ist, $V_t^S$ der Satz von Knoten in $S_t$ ist, und $p_{ij,t}$ der p-Wert für eine gegebene Kante $(i, j) \in E_t$ ist.

**19.** System nach Anspruch 15, wobei die Verarbeitungskerne ferner ausgelegt sind:

ankommende Kanten, die zu Knoten mit einem Eingangsgrad von eins gehen, aus dem Anomaliegraphen zu löschen; und/oder
jeden schwach verbundenen Subgraphen in dem Anomaliegraphen zu bestimmen.

**Revendications**

**1.** Procédé mis en oeuvre par ordinateur, comprenant :

la détermination (205), par un système informatique, d'un graphe d'anomalies d'un réseau comprenant des noeuds, des arêtes et un demi-degré intérieur des noeuds dans le graphe d'anomalies comprenant des sous-graphes au cours d'une période de temps ;
la désignation (225), par le système informatique, de noeuds présentant un demi-degré intérieur d'au moins deux comme cibles potentielles ;
la désignation (230), par le système informatique, de noeuds sans demi-degré intérieur et connexions de noeuds communs présents au cours de la période de temps comme noeuds potentiellement compromis ; et
la fourniture en sortie (235), par le système informatique, des noeuds potentiellement compromis désignés comme potentiellement associés à une attaque coordonnée sur le réseau lorsque les noeuds potentiellement compromis sont reliés à au moins un des noeuds cibles potentiels.

**2.** Procédé mis en oeuvre par ordinateur selon la revendication 1, dans lequel les étapes de la revendication 1 sont réalisées périodiquement, par le système informatique, au cours de fenêtres temporelles glissantes.

**3.** Procédé mis en oeuvre par ordinateur selon la revendication 1, comprenant en outre :
la suppression (210), par le système informatique, du graphe d'anomalies, d'arêtes entrantes allant à des noeuds dont le demi-degré intérieur vaut un.

**4.** Procédé mis en oeuvre par ordinateur selon la revendication 1, comprenant en outre :
la détermination (215), par le système informatique, de chaque sous-graphe faiblement connexe dans le graphe d'anomalies.

**5.** Procédé mis en oeuvre par ordinateur selon la revendication 4, comprenant en outre :

$$O_k = \sum_{i<j} \max\{\mathbb{I}(e_{ij} \in E_k), \mathbb{I}(e_{ji} \in E_k)\}$$

le calcul (220) d'une statistique sommaire pour $O_k$ pour chaque sous-graphe au moyen d'un certain nombre d'arêtes non orientées dans le sous-graphe donné, la statistique sommaire étant déterminée par :

$$O_k = \sum_{i<j} \max\{\mathbb{I}(e_{ij} \in E_k), \mathbb{I}(e_{ji} \in E_k)\}$$

où $e_{ij}$ et $e_{ji}$ représentent des arêtes dans un ensemble d'arêtes $E_k$ pour le sous-graphe donné.

**6.** Procédé mis en oeuvre par ordinateur selon la revendication 1, dans lequel le système informatique est configuré pour traiter tous les noeuds et arêtes dans le graphe d'anomalies comme des entités indépendantes.

**7.** Procédé mis en oeuvre par ordinateur selon la revendication 1, dans lequel, pour un seuil de p-valeur $T \in (0,1)$, le graphe d'anomalies $S_t = (V_t^S, E_t^S)$ du réseau est formé à partir des arêtes possédant une p-valeur positive inférieure au seuil :

$$E_t^S = \{(i,j) \in E_t | p_{ij,t} < T\}$$

$$V_t^S = \{i \in V_t | \exists j \neq i \in V_t \text{ s.t. } (i,j) \in E_t^S \text{ or } (j,i) \in E_t^S\}$$

où $E_t^S$ est un ensemble d'arêtes dans $S_t$, $V_t^S$ est l'ensemble de noeuds dans $S_t$ et $p_{ij,t}$ est la p-valeur pour une arête donnée $(i,j) \in E_t$.

**8.** Appareil, comprenant :

au moins un processeur (510) ; et
une mémoire (515) stockant des instructions de programme d'ordinateur, les instructions, une fois exécutées par l'au moins un processeur, étant configurées pour amener l'au moins un processeur à :

générer un graphe d'anomalies pour un réseau au cours d'une période de temps ;
surveiller un réseau sur des périodes de temps dans le but de déterminer un comportement anormal signifiant une activité potentielle d'un groupe d'attaquants au cours d'au moins une période de temps, la détermination du comportement anormal étant basée sur une détermination de la présence ou non de multiples noeuds sans demi-degré intérieur et connexions de noeuds communs au cours de la période de temps ; et
fournir une indication qu'une attaque groupée potentielle se produit dans le réseau en cas de détermination d'un comportement anormal au cours d'au moins une période de temps dans un ou plusieurs sous-graphes du graphe d'anomalies.

**9.** Appareil selon la revendication 8, dans lequel le comportement anormal comprend un comportement chevauchant ou corrélé où un groupe de noeuds potentiellement compromis tentent de se lier à des noeuds communs au cours d'au moins une des périodes de temps.

**10.** Appareil selon la revendication 8, dans lequel les instructions sont configurées en outre pour amener l'au moins un processeur à déterminer une p-valeur pour chaque arête dans le réseau, la p-valeur indiquant jusqu'à quel point une arête respective s'est écartée de son comportement normal.

11. Appareil selon la revendication 10, dans lequel, pour un seuil de p-valeur T E (0,1), les instructions sont configurées en outre pour amener l'au moins un processeur à former un graphe d'anomalies $S_t = (V_t^S, E_t^S)$ du réseau à partir d'arêtes possédant une *p*-valeur positive inférieure au seuil :

$$E_t^S = \left\{ (i,j) \in E_t | p_{ij,t} < T \right\}$$

$$V_t^S = \{ i \in V_t | \exists j \neq i \in V_t \text{ s.t. } (i,j) \in E_t^S \text{ or } (j,i) \in E_t^S \}$$

où $E_t^S$ est un ensemble d'arêtes dans $S_t$, $V_t^S$ est l'ensemble de noeuds dans $S_t$ et $p_{ij,t}$ est la p-valeur pour une arête donnée $(i,j) \in E_t$.

12. Appareil selon la revendication 11, dans lequel les instructions sont configurées en outre pour amener l'au moins un processeur à :
supprimer, du graphe d'anomalies, des arêtes entrantes allant à des noeuds dont le demi-degré intérieur vaut un.

13. Appareil selon la revendication 11, dans lequel les instructions sont configurées en outre pour amener l'au moins un processeur à :
déterminer chaque sous-graphe faiblement connexe dans le graphe d'anomalies.

14. Appareil selon la revendication 13, dans lequel les instructions sont configurées en outre pour amener l'au moins un processeur à calculer une statistique sommaire pour $O_k$ pour chaque sous-graphe au moyen d'un certain nombre d'arêtes non orientées dans le sous-graphe donné, la statistique sommaire étant déterminée par :

$$O_k = \sum_{i<j} \max\{ \mathbb{I}(e_{ij} \in E_k), \mathbb{I}(e_{ji} \in E_k) \}$$

où $e_{ij}$ et $e_{ji}$ représentent des arêtes dans un ensemble d'arêtes $E_k$ pour le sous-graphe donné.

15. Système, comprenant :

une mémoire stockant des instructions de programme d'ordinateur configurées pour détecter des anomalies dans un réseau ; et
une pluralité de coeurs de traitement configurés pour exécuter les instructions de programme d'ordinateur stockées, la pluralité de coeurs de traitement étant configurés pour :

générer un graphe d'anomalies pour un réseau au cours d'une période de temps ;
déterminer la présence ou non de multiples noeuds sans demi-degré intérieur et connexions de noeuds communs au cours de la période de temps ; et
générer une indication d'une attaque groupée potentielle sur le réseau lorsque le système détermine la présence de multiples noeuds sans demi-degré intérieur et connexions de noeuds communs dans un ou plusieurs sous-graphes du graphe d'anomalies.

16. Système selon la revendication 15, dans lequel l'indication comprend des noeuds potentiellement compromis sans demi-degré intérieur et connexions de noeuds communs, et des noeuds cibles potentiels présentant un demi-degré intérieur d'au moins deux auxquels les noeuds potentiellement compromis sont reliés.

17. Système selon la revendication 15, dans lequel la pluralité de coeurs de traitement sont configurés en outre pour déterminer une *p*-valeur pour chaque arête dans le réseau, la *p*-valeur indiquant jusqu'à quel point une arête respective s'est écartée de son comportement normal.

**18.** Système selon la revendication 17, dans lequel, pour un seuil de p-valeur $T \in (0,1)$, les coeurs de traitement sont configurés en outre pour former le graphe d'anomalies $S_t = (V_t^S, E_t^S)$ du réseau à partir d'arêtes possédant une p-valeur positive inférieure au seuil :

$$E_t^S = \left\{(i,j) \in E_t | p_{ij,t} < T\right\}$$

$$V_t^S = \{i \in V_t | \exists j \neq i \in V_t \text{ s.t. } (i,j) \in E_t^S \text{ or } (j,i) \in E_t^S\}$$

où $E_t^S$ est un ensemble d'arêtes dans $S_t$, $V_t^S$ est l'ensemble de noeuds dans $S_t$ et $p_{ij,t}$ est la p-valeur pour une arête donnée $(i,j) \in E_t$.

**19.** Système selon la revendication 15, dans lequel les coeurs de traitement sont configurés en outre pour :

supprimer, du graphe d'anomalies, des arêtes entrantes allant à des noeuds dont le demi-degré intérieur vaut un ; et/ou
déterminer chaque sous-graphe faiblement connexe dans le graphe d'anomalies.

# FIG. 1A

(1 / 6)

# FIG. 1B

(2 / 6)

110

# FIG. 2

(3 / 6)

200

START

Determine Anomaly Graph — 205

Delete Edges going to Nodes with Indegree of 1 — 210

Find each Weakly Connected Subgraph — 215

Calculate Summary Statistic for Each Subgraph — 220

Designate Nodes with Indegree >= 2 as Potential Targets — 225

Designate Nodes with Indegree = 0 as Potentially Compromised — 230

Output Potentially Compromised Nodes having Common Connection(s) — 235

END

# FIG. 3

(4 / 6)

300

```
        ┌─────────────┐
        │    START    │
        └─────────────┘
               │
               ▼
        ┌─────────────┐
        │ Monitor Network │ ──── 305
        └─────────────┘
               │
               ▼
        ┌─────────────────┐
        │ Delete Edges going to │ ──── 310
        │ Nodes with Indegree │
        │       of 1       │
        └─────────────────┘
               │
               ▼
        ┌─────────────────┐
        │  Find each Weakly  │ ──── 315
        │ Connected Subgraph │
        └─────────────────┘
               │
               ▼
        ┌─────────────────┐
        │ Calculate Summary │ ──── 320
        │  Statistic for Each │
        │      Subgraph     │
        └─────────────────┘
               │
               ▼
        ┌─────────────────┐
        │ Provide Group Attack │ ──── 325
        │    Indication if    │
        │ Anomalous Behavior │
        └─────────────────┘
               │
               ▼
        ┌─────────────┐
        │     END     │
        └─────────────┘
```

# FIG. 4

(5 / 6)

400

```
      ┌─────────────┐
      │    START    │
      └──────┬──────┘
             │
             ▼
   ┌──────────────────┐
   │ Generate Anomaly │ ── 405
   │      Graph       │
   └────────┬─────────┘
            │
            ▼
   ┌──────────────────┐
   │ Delete Edges going to │ ── 410
   │ Nodes with Indegree   │
   │        of 1           │
   └────────┬─────────┘
            │
            ▼
   ┌──────────────────┐
   │  Find each Weakly │ ── 415
   │ Connected Subgraph│
   └────────┬─────────┘
            │
            ▼
   ┌──────────────────┐
   │ Determine whether │
   │ Multiple Nodes having │ ── 420
   │   no Indegree and     │
   │    having Common      │
   │   Connections Exist   │
   └────────┬─────────┘
            │
            ▼
   ┌──────────────────┐
   │ If so, Provide Group │ ── 425
   │   Attack Indication  │
   └────────┬─────────┘
            │
            ▼
      ┌─────────────┐
      │     END     │
      └─────────────┘
```

# FIG. 5

(6 / 6)

500

| | |
|---|---|
| Display 525 | |
| Keyboard 530 | |
| Cursor Control Device 535 | |

| | | |
|---|---|---|
| Communication Device 520 | | Processor(s) 510 |

Bus 505

540    545                                          550

| Operating System | Group Attack Detection Module | Other Functional Modules |
|---|---|---|

Memory 515

**EP 2 828 753 B1**

**Patent documents cited in the description**

- US 2007209074 A
- US 2005044406 A
- US 2007226796 A